# EUROPEAN PATENT APPLICATION

(11) **EP 4 679 373 A1**
(43) Date of publication of application: **14.01.2026**
(21) Application number: 24766279.4
(22) Date of filing: 27.02.2024
(51) Int. Cl.: G06T 11/00

(54) **METHOD, DEVICE AND SYSTEM FOR GENERATING SURROUND-VIEW IMAGE, AND COMPUTER PROGRAM PRODUCT AND MOTOR VEHICLE**

(30) Priority: 08.03.2023 CN 202310267644
(71) Applicant: Valeo Interior Controls (Shenzhen) Co., Ltd, Shenzhen, Guangdong 518128 (CN)
(72) Inventor: ZOU, Xiantao, Shenzhen, Guangdong 518128 (CN)
(74) Representative: Pothmann, Karsten
(86) International application number: PCT/CN2024/078693
(87) International publication number: WO 2024/183557

(57) **Abstract**

Provided in the present disclosure are a method, device and system for generating a surround-view image, and a computer program product and a motor vehicle. An image can be captured from an image capture region where there is no shadow, and the image can be used to reconstruct an image which covers a second filling range corresponding to a first filling range, that is, also covering a region corresponding to the vehicle bottom of a motor vehicle. Since there is no shadow in an image which is captured from an image capture region, after affine transformation is performed on the image, a reconstructed image, which covers the second filling region and comprises an under-vehicle image, does not comprise a shadow. Therefore, the observation and determination of under-vehicle-related information by a driver of a motor vehicle being affected due to a reconstructed under-vehicle image of the vehicle containing a lot of shadows and distorted shadows is effectively prevented.

## Description

### Technical Field

The present invention relates to a method for generating a surround-view image, a panoramic surround-view device, a panoramic surround-view system, a computer program product and a motor vehicle, which can generate a panoramic surround-view image without blind spots under a vehicle.

### Background

Currently, in the field of motor vehicles, especially in the field of road vehicles, more and more panoramic imaging systems are being put into use. The panoramic imaging system can provide a complete surround-view image reflecting the surrounding environment of the motor vehicle. Therefore, especially in scenes with complex obstacles around the motor vehicle, such as parking scenes and crowded road scenes, the panoramic imaging system can intuitively provide the driver with information about the surrounding environment of the motor vehicle, effectively avoiding collisions between the motor vehicle and obstacles around the motor vehicle.

Currently, in addition to being able to display the surrounding environment of the motor vehicle, the panoramic imaging system can also provide a perspective from under the vehicle. Therefore, the motor vehicle driver can also obtain information related to the underside of the motor vehicle. In this field, an affine transformation is usually performed on the acquired image of the surrounding environment of the motor vehicle according to the driving parameters of the motor vehicle to reconstruct an underside image of the motor vehicle. However, in the case where there are shadows around the motor vehicle, performing an affine transformation on the image containing the shadows will cause the reconstructed underside image of the vehicle to contain a large number of shadows and distorted shadows. Therefore, the motor vehicle driver's observation and judgment of information related to the underside of the vehicle are affected.

Therefore, there is a need for a panoramic imaging system capable of providing a vehicle underside image without being affected by shadows.

### Summary

Therefore, an objective of the present invention is to provide a method, device and system for generating a surround-view image, a computer program product and a motor vehicle, which can provide a surround-view image of a shadow-free vehicle underside image, thereby eliminating the influence of shadows under a vehicle on a motor vehicle driver.

In the sense of the present disclosure, the motor vehicle may be any vehicle. Preferably, the motor vehicle is, for example, a road vehicle or a train. Particularly preferably, the motor vehicle is a road vehicle, such as a passenger vehicle or a truck.

A first aspect of the present disclosure relates to a method for generating a surround-view image, comprising: at a first moment, determining a first environment image around a motor vehicle, wherein the first environment image is covered with a first filling range, and wherein the first filling range covers a region corresponding to an underside of the motor vehicle in the first environment image, and covers a shadow region around the motor vehicle in the first environment image; intercepting an image from an image interception region in the first environment image, wherein the image interception region is outside the first filling range of the first environment image; acquiring operating parameters of the motor vehicle; at a second moment after the first moment, determining a second environment image around the motor vehicle, wherein the second environment image is covered with a second filling range corresponding to the first filling range; and according to the operating parameters, mapping the image to the second filling range of the second environment image to generate a surround-view image.

According to a more detailed implementation of the method of the present disclosure, the method further comprises: intercepting a third filling range image corresponding to a third filling range from the surround-view image, wherein the second environment image is covered with a third filling range, and wherein the third filling range corresponds to a region corresponding to the underside of the motor vehicle in the second environment image and does not cover the shadow region of the motor vehicle in the second environment image; and stitching the third filling range image into the second environment image to generate a surround-view image including the shadow region.

According to a more detailed implementation of the method of the present disclosure, in a traveling direction of the motor vehicle, the image interception region is adjacent to the first filling range.

According to a more detailed implementation of the method of the present disclosure, the method further comprises: in the surround-view image or the surround-view image including the shadow region, rendering a transparent vehicle model corresponding to the motor vehicle in a region corresponding to the underside of the motor vehicle.

According to a more detailed implementation of the method of the present disclosure, the method further comprises: determining the first filling range and/or the second filling range according to a size of the shadow region around the motor vehicle and a size of the motor vehicle.

A second aspect of the present disclosure relates to a panoramic surround-view device, comprising: one or more processors; and one or more memories, wherein the memories have computer-readable instructions stored herein, and the computer-readable instructions, when executed by the one or more processors, cause the one or more processors to perform the method according to the present disclosure as described above.

A third aspect of the present disclosure relates to a computer program product comprising computer- readable instructions, wherein the computer-readable instructions, when executed by a processor, cause the processor to perform the method according to the present disclosure as described above.

A fourth aspect of the present disclosure relates to a panoramic surround-view system, comprising:
an image acquisition module configured for determining a first environment image around a motor vehicle at a first moment, and determining a second environment image around the motor vehicle at a second moment after the first moment, wherein the first environment image is covered with a first filling range, wherein the first filling range covers a region corresponding to an underside of the motor vehicle in the first environment image, and covers a shadow region around the motor vehicle in the first environment image, and wherein the second environment image is covered with a second filling range corresponding to the first filling range; and
an image reconstruction module configured for intercepting an image from an image interception region in the first environment image, and mapping the image to the second filling range of the second environment image according to the operating parameters to generate a surround-view image, wherein the image interception region is outside the first filling range of the first environment image.

According to a more detailed embodiment of the panoramic surround-view system of the present disclosure, the image reconstruction module is further configured for: intercepting a third filling range image corresponding to a third filling range from the surround-view image, wherein the second environment image is covered with a third filling range, and wherein the third filling range corresponds to a region corresponding to the underside of the motor vehicle in the second environment image and does not cover the shadow region of the motor vehicle in the second environment image; and stitching the third filling range image into the second environment image to generate a surround-view image including the shadow region.

A fifth aspect of the present disclosure relates to a motor vehicle. The motor vehicle is equipped with the panoramic surround-view device as described above or the panoramic surround-view system as described above.

By using the method, device and system for generating the surround-view image, the computer program product and the motor vehicle according to the present disclosure, an image can be intercepted from the shadow-free image interception region, and the image can be used to reconstruct an image covering the second filling range corresponding to the first filling range, the second filling range also covering the region corresponding to the underside of the motor vehicle. Since there is no shadow in the image intercepted from the image interception region, the image of the second filling range including an underside image, which is reconstructed after affine transformation, also does not include a shadow. Therefore, this effectively prevents the reconstructed underside image of the vehicle from containing a large number of shadows and distorted shadows that affect the motor vehicle driver's observation and judgment of information related to the underside of the vehicle.

### Brief Description of the Drawings

The above and other objectives, features, and advantages of the embodiments of the present disclosure will become more apparent from the detailed description of the embodiments of the present disclosure with reference to the drawings. The drawings, which are used to provide a further understanding of the embodiments of the present disclosure and constitute a part of the specification, are used to explain the present disclosure together with the embodiments of the present disclosure, and do not constitute a limitation of the present disclosure. In the drawings, identical reference signs generally represent identical components or steps. In the drawings:
Fig. 1A illustratively shows a motor vehicle surround-view image in a first frame;
Fig. 1B illustratively shows a motor vehicle surround-view image in a second frame;
Fig. 1C illustratively shows a motor vehicle surround-view image in a third frame;
Fig. 1D illustratively shows a motor vehicle surround-view image in a subsequent frame;
Fig. 2 schematically shows a motor vehicle surround-view image in which a vehicle underside image includes a large number of shadows;
Fig. 3 shows a flowchart of a method for generating a surround-view image according to an embodiment of the present disclosure;
Fig. 4A schematically shows a motor vehicle surround-view image generated corresponding to a first moment according to an embodiment of the present disclosure;
Fig. 4B schematically shows a motor vehicle surround-view image generated corresponding to a second moment according to the embodiment of the present disclosure;
Fig. 4C schematically shows a motor vehicle surround-view image generated corresponding to a third moment according to the embodiment of the present disclosure;
Fig. 4D schematically shows a surround-view image including a complete filling range image and a vehicle underside region image;
Fig. 5A shows a first environment image around a motor vehicle determined by a method for generating a surround-view image according to an embodiment of the present disclosure;
Fig. 5B shows a surround-view image including a vehicle underside image generated by the method for generating the surround-view image according to the embodiment of the present disclosure;
Fig. 6 shows a flowchart of a method for generating a surround-view image according to another embodiment of the present disclosure;
Fig. 7 shows a motor vehicle surround-view image generated corresponding to a second moment according to another embodiment of the present disclosure;
Fig. 8 shows a surround-view image generated according to another embodiment of the present disclosure;
Fig. 9 shows a panoramic surround-view device according to an embodiment of the present disclosure;
Fig. 10 shows a computer program product according to an embodiment of the present disclosure;
Fig. 11 shows a panoramic surround-view system according to an embodiment of the present disclosure; and
Fig. 12 shows a motor vehicle according to an embodiment of the present disclosure.

### Detailed Embodiments

The technical solutions in the embodiments of the present disclosure will be described clearly and completely below with reference to the drawings in embodiments of the present disclosure. Obviously, the described embodiments are merely some rather than all of the embodiments of the present disclosure. All other embodiments obtained by those of ordinary skill in the art on the basis of the embodiments in the present disclosure without inventive effort are included in the scope of protection of the present disclosure.

In addition, in this Description and the drawings, the terms "first/second" are merely used to distinguish between similar objects and do not represent a specific sorting of the objects. It can be understood that if permitted, "first/second" may be exchanged for a specific order or sequence, to enable the embodiments of the present disclosure described herein to be implemented in a different order from that illustrated or described herein.

In addition, in this Description and the drawings, if a flowchart is used to describe steps of a method according to an embodiment of the present disclosure, it should be understood that a previous or following step is not necessarily performed precisely in order. Conversely, various steps may be processed in reverse order or at the same time, unless explicitly defined in the embodiments of the present disclosure. Moreover, other operations may be added to these processes, or one or more steps may be removed from these processes.

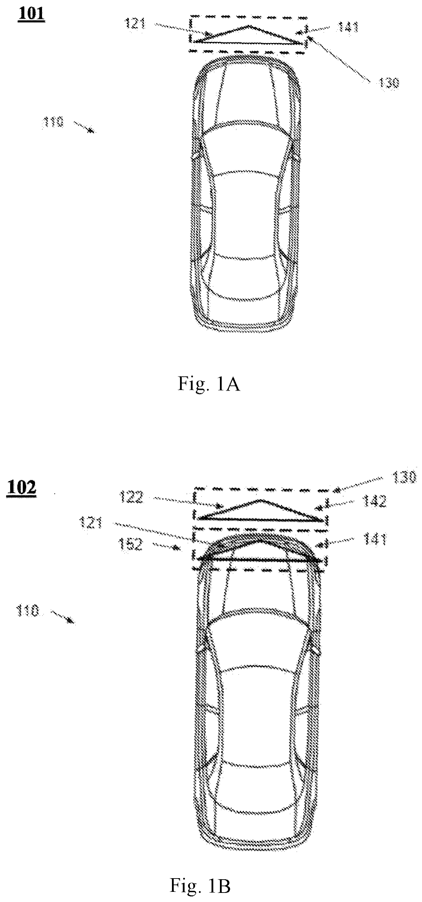

Figs. 1A to 1D schematically show a motor vehicle surround-view image including an image showing the underside of the motor vehicle. In the case of a low solar altitude angle, such as in winter and in the evening, the motor vehicle is usually surrounded by a shadow. Fig. 1A illustratively shows a motor vehicle surround-view image 101 in a first frame in the case that the sun illuminates the motor vehicle 110 from directly behind the motor vehicle 110. Therefore, a first shadow 121 of the motor vehicle is projected directly in front of the motor vehicle 110. The first shadow 121 is schematically shown here as a triangle.

At the moment of the first frame, a conventional panoramic imaging system with a vehicle underside image display function usually first acquires an image 141 in an image interception region 130 in front of the motor vehicle 110. Here, the image interception region 130 is schematically framed by a dotted line, and the image 141 is located within the range of the dotted line frame. As shown in Fig. 1A, since the image interception region 130 includes the first shadow 121 of the motor vehicle, the image 141 acquired at this moment also includes the first shadow 121 of the motor vehicle.

Thereafter, according to motor vehicle driving parameters, such as the current speed, current position, current steering, etc. of the motor vehicle 110, the image 141 is mapped to a corresponding position 152 of an underside region of the motor vehicle by means of affine transformation and displayed in a motor vehicle surround-view image 102 in a second frame to be displayed. Fig. 1B illustratively shows the motor vehicle surround-view image 102 in the second frame.

Since the mapped image 141 includes the first shadow 121 of the motor vehicle in the first frame, after mapping, the image displayed at the corresponding position 152 of the underside region of the motor vehicle 110 also includes the first shadow 121. Therefore, this causes the reconstructed vehicle underside image to include the first shadow 121, thereby imaging the use of the panoramic imaging system by a motor vehicle driver.

Similarly, at the moment of the second frame, the conventional panoramic imaging system with the vehicle underside image display function usually continues to acquire an image 142 in the image interception region 130 in front of the motor vehicle 110. Since the solar altitude angle is still small at the moment of the second frame, a second shadow 122 of the motor vehicle continues to be projected in front of the motor vehicle 110. Here, the second shadow 122 is also schematically shown by a triangle. The second shadow 122 is included in the image interception region 130. Therefore, similarly, the second shadow 122 of the motor vehicle is also included in the image 142 acquired at this moment.

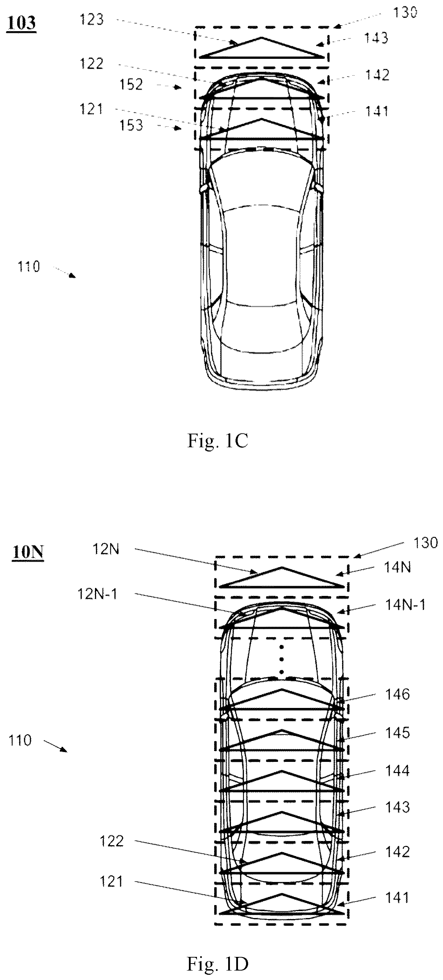

Thereafter, similarly, the image 142 is mapped to a corresponding position 152 of the underside region of the motor vehicle by means of affine transformation according to the motor vehicle driving parameters, and is displayed in the motor vehicle surround-view image 103 in a third frame to be displayed. In addition, similarly, the image 141 is mapped to a corresponding position 153 of the underside region of the motor vehicle by means of affine transformation according to the motor vehicle driving parameters and displayed in the motor vehicle surround-view image 103 in the third frame to be displayed. Fig. 1C illustratively shows the motor vehicle surround-view image 103 in the third frame.

Since the image 142 acquired at the moment of the second frame for reconstructing the vehicle underside image includes the second shadow 122, and the image 141 acquired at the moment of the first frame for reconstructing the vehicle underside image includes the first shadow 121, after mapping, the images displayed at the corresponding positions 152 and 153 of the underside region of the motor vehicle 110 also include the second shadow 122 and the first shadow 121, thereby imaging the use of the panoramic imaging system by the motor vehicle driver.

Similarly, at the moment of a subsequent frame, the shadows around the motor vehicle 110 continue to be mapped to corresponding positions of the underside region of the motor vehicle and displayed in the motor vehicle surround-view image 10N in the subsequent frame. Fig. 1D illustratively shows the motor vehicle surround-view image 10N in the subsequent frame. As shown in Fig. 1D, the image of the underside region of the motor vehicle includes a large number of shadows 121,..., and 12N-1. These shadows are enriched in the image of the underside region of the motor vehicle 110, affecting the motor vehicle driver's observation of the vehicle underside region and the vehicle underside information, such as whether there are obstacles, pits, etc. under the vehicle, resulting in the panoramic imaging system no longer being able to provide effective reference for the motor vehicle driver.

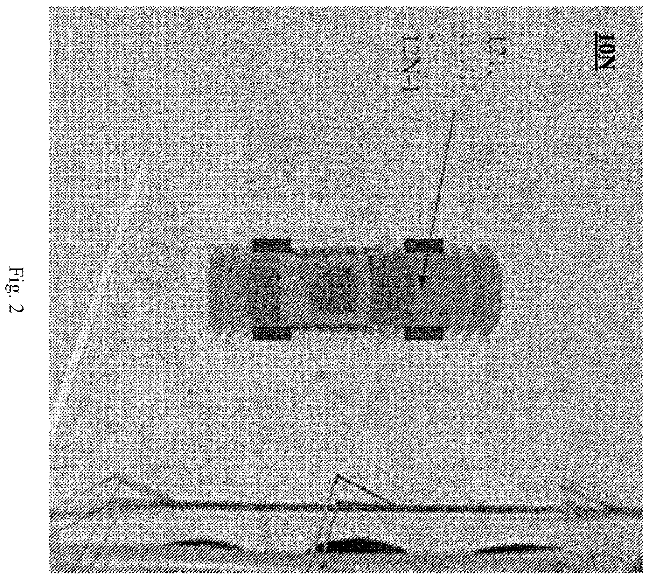

A motor vehicle surround-view image in which a vehicle underside image contains a large number of shadows is also shown in Fig. 2. As shown in Fig. 2, shadows 121, ..., and 12N-1 of a vehicle underside part can seriously affect the motor vehicle driver's observation of the bottom of the motor vehicle when using the panoramic imaging system.

To this end, the present disclosure proposes a method for generating a surround-view image. In the method, an image is intercepted from a shadow-free image interception region, and the image is used to reconstruct an image of a region corresponding to the underside of the motor vehicle at a subsequent moment, thereby effectively preventing the reconstructed vehicle underside image from containing a large number of shadows.

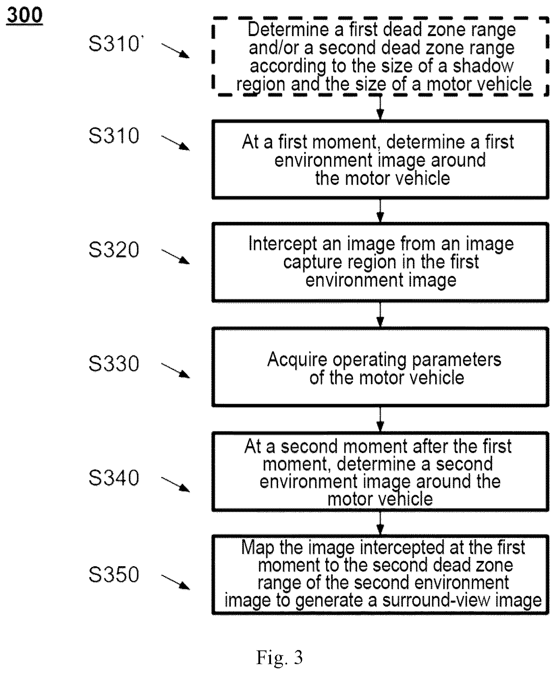

Fig. 3 shows a flowchart of a method 300 for generating a surround-view image according to an embodiment of the present disclosure. The method 300 for generating the surround-view image according to the embodiment of the present disclosure may be used, for example, in a vehicle equipped with a panoramic surround-view system, such as a passenger vehicle or a truck, but the embodiment of the present disclosure is not limited thereto. The method 300 for generating the surround-view image according to the embodiment of the present disclosure can also be used in any other motor vehicle that needs to generate a surround-view image of its surroundings.

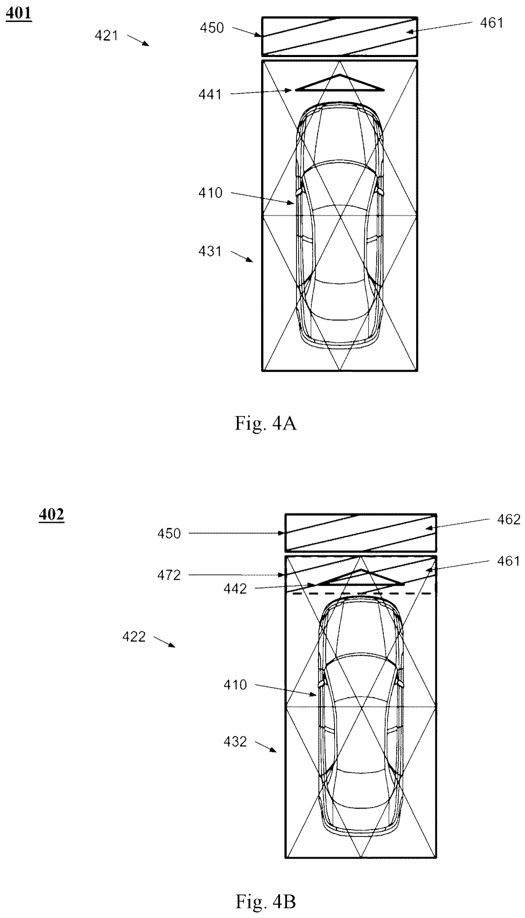

In addition, Figs. 4A and 4B further show motor vehicle surround-view images 401 and 402 generated by performing the method 300. Hereinafter, for the sake of clarity, the method 300 for generating the surround-view image according to the embodiment of the present disclosure will be described with reference to Figs. 3, 4A and 4B in combination.

Fig. 4A shows the motor vehicle surround-view image 401 generated corresponding to a first moment. As shown in Figs. 3 and 4A, first, in step S310, at the first moment, which is, for example, the moment of a first frame, a first environment image 421 around a motor vehicle 410 is determined. Here, for example, a plurality of camera devices installed on the motor vehicle 410 for acquiring different azimuth environments of the motor vehicle 410 may be used to acquire images reflecting a plurality of different azimuth environments around the motor vehicle 410, such as four-way video images. Then, by performing image stitching on the images of the plurality of different azimuth environments and further performing perspective transformation, a motor vehicle surround-view image 400 in a top-view perspective as shown in Fig.4A is obtained, and the first environment image 421 around the motor vehicle 410 is determined. Here, as described above, since the environment image is formed by stitching images captured by the plurality of camera devices arranged on the motor vehicle, the region under the motor vehicle cannot be represented in the environment image. Subsequently, it is necessary to reconstruct an image of the region under the motor vehicle. It should be pointed out here that the present disclosure does not intend to limit the method for generating the first environment image 421 and the specific perspective (top-view perspective, side-rear-view oblique perspective, etc.) for displaying the motor vehicle surround-view image 400.

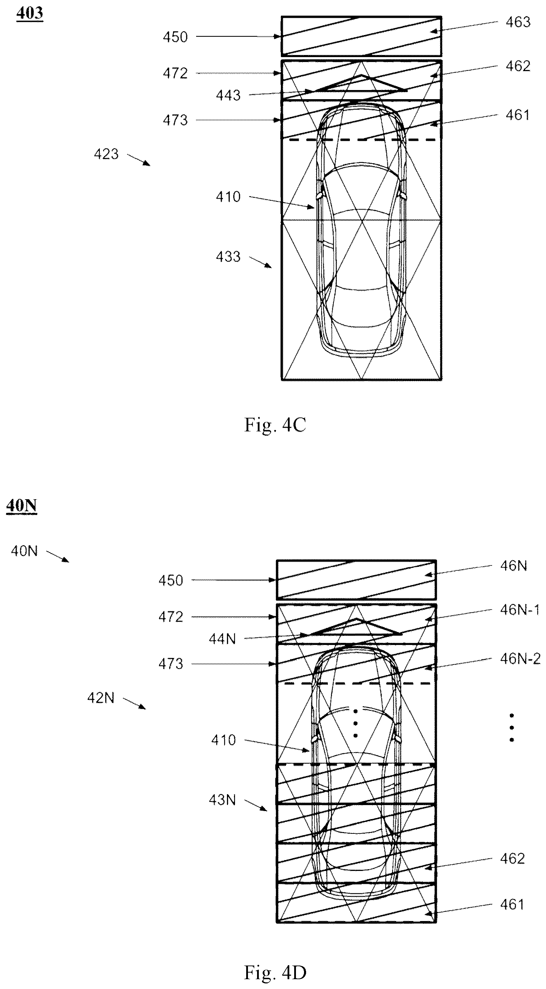

As shown in Fig. 4A, the first environment image 421 is covered with a first filling range 431. In the real first environment image 421, since it is covered with the first filling range 431, a region of the first environment image 421 covered with the first filling range 431 can no longer be displayed. However, here, in order to clearly illustrate the region covered by the first filling range 431, in Fig. 4A, the first filling range 431 is schematically shown by a transparent rectangular region with a triangular grid. As shown in Fig. 4, in addition to completely covering the image of the underside region of the motor vehicle 410, the first filling range 431 further covers a shadow region 441 around the motor vehicle in the first environment image 421. Here, similarly, the shadow region 441 is schematically shown by a triangle. Therefore, since the shadow region 441 is covered, the first environment image 421, after being covered, cannot display the region of the first environment image 421 covered with the first filling range 431, that is, the shadow region 441.

Here, the first filling range (and a second filling range to be mentioned in subsequent step S340) may be determined according to the size of the shadow region around the motor vehicle and the size of the motor vehicle, so that the filling range can completely cover the shadow region around the motor vehicle. For example, the size of the shadow region around the motor vehicle can be statistically determined in advance, the filling range is determined in advance, and the filling range with this size is always used to cover the environment image in the subsequent method of generating the surround-view image. The size of the filling range can also be determined and dynamically adjusted in the method of generating the surround-view image by determining the shadow region in the environment image. Therefore, the method 300 for generating the surround-view image according to the embodiment of the present disclosure may further include, in step S310', determining the first filling range 431 and/or the second filling range 432 to be mentioned below according to the size of the shadow region around the motor vehicle and the size of the motor vehicle.

Furthermore, in step S320, an image 461 is intercepted from an image interception region 450 in the first environment image 421. Here, as shown in Fig.4A, in the first environment image 421, the image interception region 450 is located outside the first filling range 431. Specifically, the position of the intercepted image 461 in the first environment image 421, that is, the position of the image interception region 450, may be determined according to driving parameters of the motor vehicle 410, such as a driving direction, a driving speed, a steering angle, etc. Preferably, in the driving direction of the motor vehicle, the image interception region 450 is adjacent to the first filling range 431. That is, illustratively, in the case that the motor vehicle 410 is moving forward, as shown in Fig.4, the image interception region 450 may be located directly in front of the first filling range 431. In the case that the motor vehicle 410 is reversing, it is also conceivable that the image interception region 450 should be located directly behind the first filling range 431. Here, the present disclosure does not limit the specific position of the image interception region 450 in the first environment image 421. Considering the difficulty of performing affine transformation, it is an optional implementation that the image interception region 450 is adjacent to the first filling range 431 in the driving direction, because the affine transformation can be completed with a smaller distance difference/time difference, avoiding inaccurate mapping results due to unpredictable movement of the motor vehicle within a longer time difference/distance difference.

As shown in Fig. 4A, the intercepted image 461 is schematically shown by a rectangle with diagonal lines therein. As described above, since the shadow region 441 has been covered by the first filling range 431 and the image interception region 450 is located outside the first filling range 431, the intercepted image 461 does not include the shadow region 441.

Furthermore, in step S330, the operating parameters of the motor vehicle 410, such as the driving direction, driving speed, and steering angle of the motor vehicle 410, are acquired. Here, illustratively, the operating parameters may be determined by means of corresponding sensor devices installed on the motor vehicle 410, or the operating parameters may be provided to the motor vehicle 410 by means of a navigation positioning system (GPS, Galileo, BDS, or other navigation systems). Here, the present disclosure also does not limit the specific method for acquiring the operating parameters. Subsequently, affine transformation is performed on the image 461 according to the acquired operating parameters to fill the underside region of the motor vehicle 410.

Then, at a second moment after the first moment, that is, at the moment of a subsequent frame after the first frame, for example, a second frame, in step S340, a second environment image 422 around the motor vehicle 410 is determined. Fig. 4B shows the motor vehicle surround-view image 402 generated corresponding to the second moment. Here, for example, the second environment image 422 may be determined in the same manner as the first environment image 421, which is not described here again for the sake of brevity.

As shown in Fig.4B, corresponding to the first environment image 421, the second environment image 422 is similarly covered with a second filling range 432 corresponding to the first filling range 431. That is, the filling range of the first filling range 431 in the first environment image 421 is equivalent to the filling range of the second filling range 432 in the second environment image 422: the first filling range 431 and the second filling range 432 have the same filling range. The second filling range 432 not only completely covers the image of the underside region of the motor vehicle 410, but also covers the shadow region 442 around the motor vehicle 410 in the second environment image 422. Since the shadow region 442 is covered, the second environment image 422 is also unable to display the region covered by the second filling range 432 in the second environment image 422, that is, the shadow region 442.

Furthermore, in step S350, the image 461 intercepted at the first moment is mapped to the second filling range 432 of the second environment image 422 according to the operating parameters acquired in step S330, and a surround-view image 402 is generated, especially a surround-view image 402 including the image of the underside region of the motor vehicle. Here, for example, predicted positions 472 in the second filling range 432 to which pixel points in the image 461 will move at the second moment may be estimated according to the operating parameters, and affine transformation is performed on each pixel point in the image 461 accordingly. The pixel points are displayed at the corresponding predicted positions 472, so as to reconstruct the image in the second filling range 432.

Then, the reconstructed image of the second filling range 432 is stitched with the second environment image 422 to generate a surround-view image 402 corresponding to the second moment and including the reconstructed image of the second filling range 432, that is, including the image of the underside region of the motor vehicle.

As described above, since the image 461 intercepted at the first moment does not include the shadow region 441, after the image 461 is mapped and transformed as shown in Fig.4B, an image within the second filling range 432 reconstructed using the image does not include a shadow. Further, since the underside region of the motor vehicle is covered by the second filling range 432, the reconstructed image of the underside region of the motor vehicle as shown in Fig.4B also does not include a shadow.

In addition, it should be noted that, in this embodiment, for the sake of brevity, Figs. 4A and 4B only schematically show part of processing performed at the first moment and the second moment in the method 300 for generating the surround-view image according to the embodiment of the present disclosure. That is, as shown in Fig. 4B, at the second moment, only the image 461 intercepted at the first moment is mapped to a partial region of the second filling range 432 (a region corresponding to the predicted positions 472), and the image of the second filling range 432 of the partial region is reconstructed. However, it is conceivable that the method 300 for generating the surround-view image according to the embodiment of the present disclosure is continuously and cyclically performed, so that a surround-view image including a complete filling range image can be generated. That is, at a moment after the second moment, for example, as shown in Fig. 4C, at a third moment after the second moment, the image 463 in the image interception region 450 is continuously acquired. Similarly, according to the driving parameters of the motor vehicle, the image 462 intercepted at the second moment may be mapped to the predicted positions 472 of the third filling range 433 by means of affine transformation, and the image 461 captured at the first moment may be mapped to the predicted positions 473 of the third filling range 433. Image stitching is performed here to generate a surround-view image 402 corresponding to the third moment. Then, similarly, the method 300 for generating the surround-view image according to the embodiment of the present disclosure is continuously and cyclically performed, so that the image of the filling range is completely reconstructed, and a surround-view image including a complete filling range image and a vehicle underside region image as shown in Fig. 4D is generated.

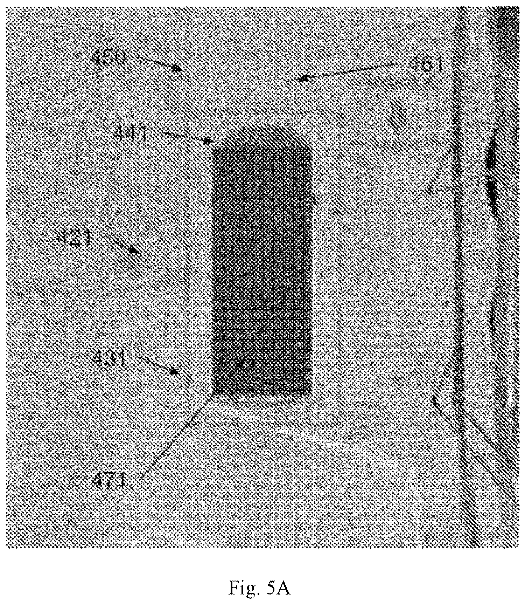

For the sake of clarity, with reference to Fig. 2, a real surround-view image generated by the method 300 according to the embodiment of the present disclosure is further shown. Fig. 5A shows a first environment image 421 around a motor vehicle 410 determined in step S310 of the method 300 for generating the surround-view image according to the embodiment of the present disclosure. Here, since the environment image is formed by stitching images captured by a plurality of camera devices arranged on the motor vehicle, the region under the motor vehicle cannot be represented in the real environment image. The region 471 corresponding to the underside of the motor vehicle in the environment image needs to be reconstructed in a subsequent step, and is currently displayed in gray in Fig. 5A.

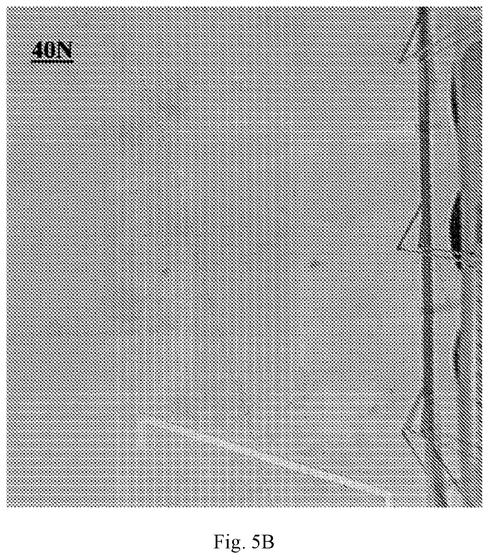

As shown in Fig. 5A, the first environment image 421 is covered with a first filling range 431. The first filling range 431 covers the region 471 corresponding to the underside of the motor vehicle in the first environment image 421. In addition, corresponding to what is described in Fig. 4A, the image interception region 450 is located directly in front of the first filling range 431. At a subsequent moment, the image intercepted in the image interception region 450 is cyclically used to reconstruct the image in the first filling range 431, so that a filling range image including the region corresponding to the underside of the motor vehicle can be reconstructed. Then, the reconstructed filling range image is stitched with the environment image corresponding to the moment, so that a surround-view image including the vehicle underside image corresponding to the moment can be generated. Fig. 5B shows a surround-view image including a vehicle underside image generated by the method 300 for generating the surround-view image according to the embodiment of the present disclosure. As shown in Fig.5B, the generated surround-view image, especially the region corresponding to the underside of the motor vehicle, does not include a shadow. Compared with Fig. 2, the method 300 for generating the surround-view image according to the embodiment of the present disclosure effectively prevents the reconstructed underside image of the vehicle from containing a large number of shadows and distorted shadows that affect the motor vehicle driver's observation and judgment of information related to the underside of the vehicle.

Since the filling range to be reconstructed covers the shadows around the motor vehicle, after reconstruction, as shown in Figs. 4A to 4C and 5B, the generated surround-view image does not include any shadow part. However, in order to make the generated surround-view image consistent with the real image of the motor vehicle's surrounding environment, it is necessary to display the shadows around the motor vehicle in the generated surround-view image.

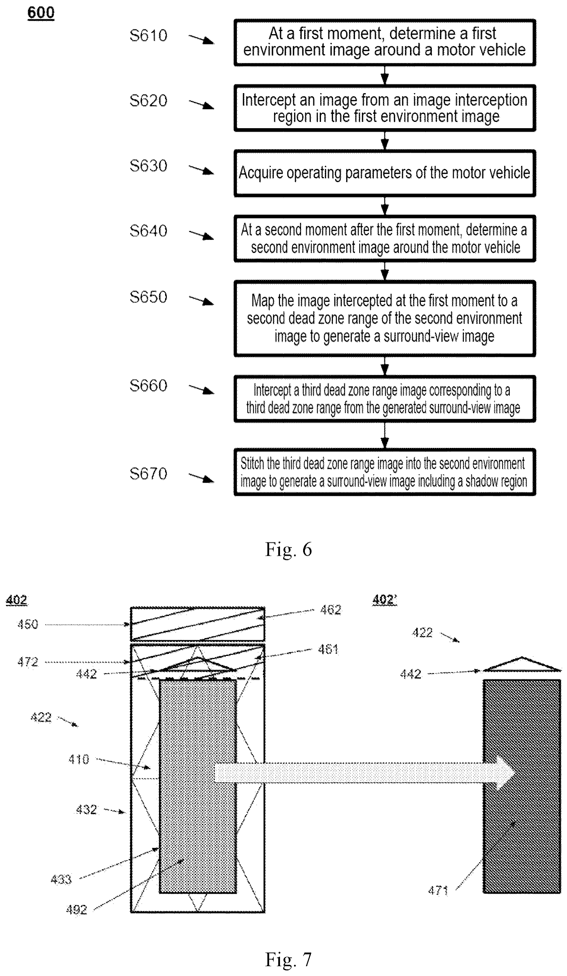

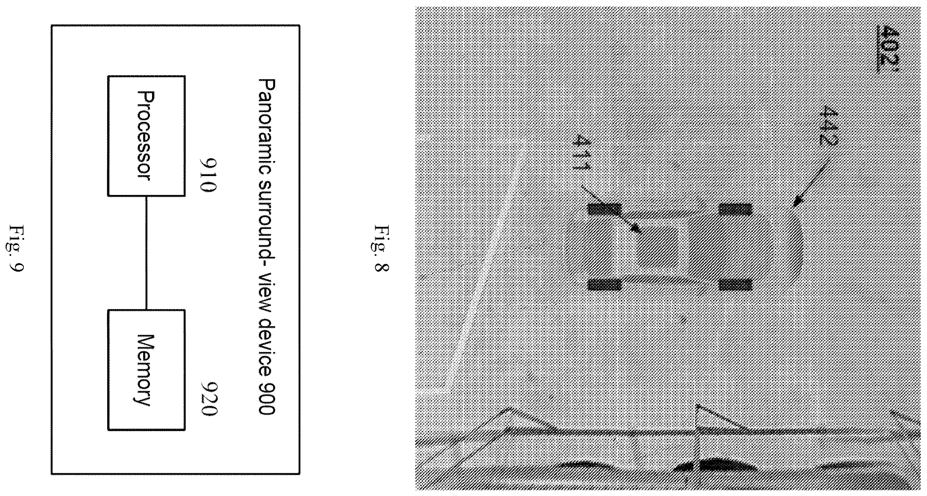

A method 600 for generating a surround-view image according to another embodiment of the present disclosure is intended to solve the above-mentioned problem. Fig. 6 schematically shows a flowchart of the method 600 for generating the surround-view image according to another embodiment of the present disclosure. Fig. 7 schematically shows a motor vehicle surround-view image 402 generated corresponding to a second moment according to another embodiment of the present disclosure. Fig. 8 shows a surround-view image generated according to another embodiment of the present disclosure. The method 600 according to another embodiment of the present disclosure will be described below with reference to Figs. 6 to 8. It should be noted here that in the method 600 for generating the surround-view image according to another embodiment of the present disclosure, a surround-view image corresponding to any moment may be further processed. It should be understood by those skilled in the art that the moment targeted by the method 600 according to another embodiment of the present disclosure is not limited to the second moment schematically shown in Fig. 7.

As shown in Fig. 6, steps S610 to S640 of the method 600 for generating the surround-view image according to another embodiment of the present disclosure correspond to steps S310 to S350 of the method described in Fig. 3, and are not described here again for the sake of brevity. According to another embodiment of the present disclosure, the method 600 further includes: in step S660, a third filling range image 492 corresponding to the third filling range 433 is intercepted from the generated surround-view image, for example, the surround-view image 402 generated corresponding to the second moment.

As shown on the left side of Fig. 7, in the surround-view image 402 generated in step S650, the second environment image 422 is covered with a third filling range 433. The third filling range 433 corresponds to a region corresponding to the underside of the motor vehicle in the second environment image 422, and does not cover the shadow region of the motor vehicle in the second environment image, for example, the shadow region 442 corresponding to the second moment. Here, for the sake of clarity, the third filling range 433 is schematically shown by a rectangle filled with gray. The third filling range 433 corresponds to the region corresponding to the underside of the motor vehicle in the second environment image 422, which can be understood as the third filling range 433 covering the underside region of the motor vehicle 410. Preferably, the third filling range 433 just covers the underside region of the motor vehicle 410. Compared with Fig. 4B, Fig. 7 shows an implementation in which the third filling range 433 just covers the underside region of the motor vehicle 410. However, it should be noted that the present disclosure does not limit the specific size and position selection of the third filling range 433. It should be understood by those skilled in the art that the third filling range 433 only needs to be able to be located in the region corresponding to the second filling range 432 in the generated surround-view image 702 and to be able to cover the underside region of the motor vehicle 410 without covering the shadow region.

In addition, according to another embodiment of the present disclosure, the method 600 further includes: in step S670, stitching the third filling range image 492 into the second environment image 422 to generate a surround-view image including the shadow region.

As shown in Fig. 7, the third filling range image 492 in the third filling range 433 is intercepted and used to fill the second environment image 422 corresponding to the moment (second moment) and not covering any filling range, especially the vehicle underside region 471 that cannot be represented in the second environment image 422, as shown on the right side of Fig. 7, so that a surround-view image 402' (see Fig. 8) including the vehicle underside region image can be generated. Since the second environment image 422 that is not covered with any filling range includes the shadow region 442, the filled image includes the shadow region 442 in addition to the vehicle underside region image 492, so that the generated surround-view image including the shadow region is more realistic.

For the sake of clarity, with reference to Fig. 8, a real surround-view image 402' including the shadow region generated by the method 300 according to another embodiment of the present disclosure is further shown. Here, the surround-view image 402' not only displays the vehicle underside region image 492, but also further displays the shadow region 442. Compared with the motor vehicle surround-view image 10N containing a large number of shadows shown in Fig. 2, the surround-view image 402' generated by the method 300 according to another embodiment of the present disclosure not only does not include a large number of shadows in the underside region of the vehicle, but also displays a shadow region consistent with the real environment around the motor vehicle, for example, in front of the motor vehicle, so that the generated surround-view image 402' is more real, further avoiding the influence on the driver caused by the difference between the surround-view image generated by the panoramic imaging system and the reality.

In addition, as shown in Fig. 8, in the method for generating the surround-view image according to another embodiment of the present disclosure, in the surround-view image or the surround-view image 402' including the shadow region, a transparent vehicle model 411 corresponding to the motor vehicle is rendered at the region corresponding to the underside of the motor vehicle. Therefore, when the underside region no longer includes a large number of shadows, on the one hand, by means of the transparent vehicle model 411, the driver can observe the underside of the motor vehicle well through the transparent vehicle model 411; on the other hand, by means of the transparent vehicle model 411, the region corresponding to the underside of the motor vehicle can be defined in the surround-view image, making it convenient for the driver to judge vehicle underside information.

In summary, the method for generating the surround-view image according to the present disclosure can effectively prevent the reconstructed vehicle underside image from containing a large number of shadows, provide a shadow-free underside vehicle perspective, and effectively prevent the shadows in the surround-view image from affecting the motor vehicle driver.

The present disclosure further provides a panoramic surround-view device 900. Fig. 9 schematically shows a panoramic surround-view device 900 according to an embodiment of the present disclosure. Here, the panoramic surround-view device 900 includes one or more processors 910; and one or more memories 920, wherein the memories have computer-readable instructions stored herein, and the computer-readable instructions, when executed by the one or more processors 910, cause the one or more processors 910 to perform the method for generating the surround-view image as described above with respect to Figs. 3 to 8. For specific descriptions of various features of the panoramic surround-view device 900 and their advantages, reference is made to the descriptions of the corresponding method above, and they are not described here again for the sake of brevity.

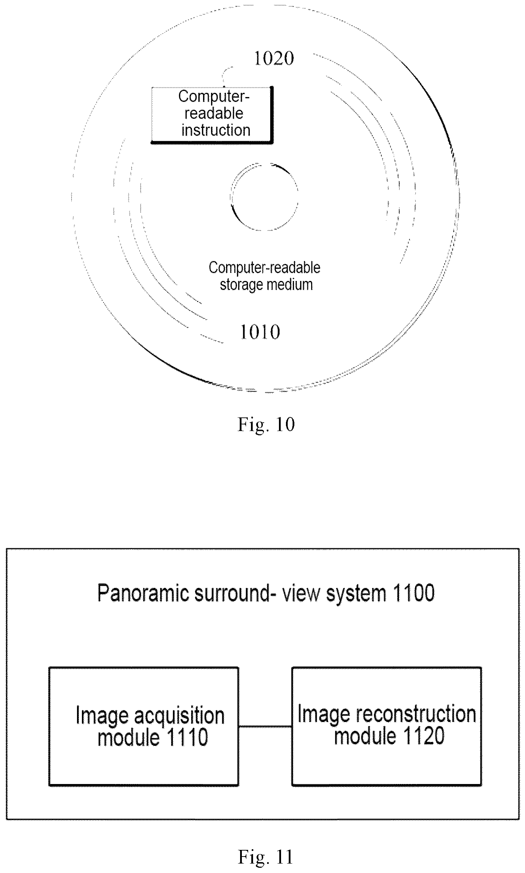

The present disclosure further provides a computer program product 1000. Fig. 10 schematically shows a computer program product 1000 according to an embodiment of the present disclosure. Here, the computer program product 1000 includes computer-readable instructions 1020 stored in a computer-readable storage medium 1010, wherein the computer-readable instructions 1020, when executed by a processor, cause the processor to perform the method for generating the surround-view image as described above for Figs. 3 to 8. Estimation method. The computer-readable storage medium includes, but is not limited to, for example, a volatile memory and/or a non-volatile memory. The volatile memory may include, for example, a random access memory (RAM) and/or a cache memory (cache), etc. The non-volatile memory may include, for example, a read-only memory (ROM), a hard disk, a flash memory, an optical disk, etc. For specific descriptions of various features in the computer program product 1000 and their advantages, reference is made to the descriptions of the corresponding method above, and they are not described here again for the sake of brevity.

The present disclosure further provides a panoramic surround-view system 1100. Fig. 11 schematically shows a panoramic surround-view system 1100 according to an embodiment of the present disclosure.

Here, the panoramic surround-view system 1100 includes: an image acquisition module 1110 configured for determining a first environment image around a motor vehicle at a first moment, and determining a second environment image around the motor vehicle at a second moment after the first moment, wherein the first environment image is covered with a first filling range, wherein the first filling range covers a region corresponding to an underside of the motor vehicle in the first environment image, and covers a shadow region around the motor vehicle in the first environment image, and wherein the second environment image is covered with a second filling range corresponding to the first filling range.

In addition, the panoramic surround-view system 1100 further includes: an image reconstruction module 1120 configured for intercepting an image from an image interception region in the first environment image, and performing affine transformation on pixel points of the image and mapping the image to the second filling range of the second environment image according to the operating parameters to generate a surround-view image, wherein the image interception region is outside the first filling range of the first environment image.

Here, for specific descriptions of various features of the panoramic surround-view system 1100 and their advantages, reference is made to the descriptions of the corresponding methods with reference to Figs. 3 to 5B above, and they are not to be described here again for the sake of brevity.

In addition, in another implementation of the panoramic surround-view system 1100 according to the present disclosure, the image reconstruction module 1120 is further configured for: intercepting a third filling range image corresponding to a third filling range from the surround-view image, wherein the second environment image is covered with a third filling range, and wherein the third filling range corresponds to a region corresponding to the underside of the motor vehicle in the second environment image and does not cover a shadow region of the motor vehicle in the second environment image; and stitching the third filling range image into the second environment image to generate a surround-view image including the shadow region.

Here, for specific descriptions of various features of the panoramic surround-view system 1100 and their advantages in the above implementation, reference is made to the descriptions of the corresponding methods with reference to Figs. 6 to 8 above, and they are not be described here again for the sake of brevity.

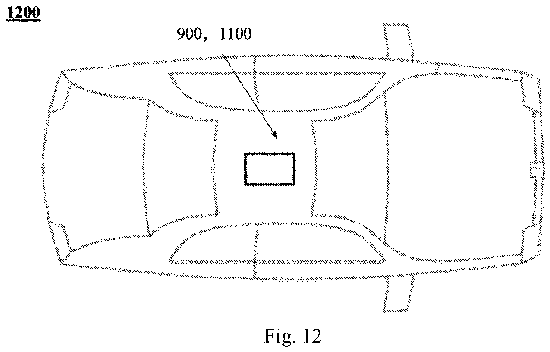

In addition, the present disclosure further provides a motor vehicle 1200. Fig. 12 schematically shows a motor vehicle 1200 according to an embodiment of the present disclosure. As shown in Fig. 12, the motor vehicle is equipped with the panoramic surround-view device 900 described above for Fig. 9 or the panoramic surround-view system 1100 described above for Fig. 11. For specific descriptions of various features of the motor vehicle 1200 and their advantages, reference is made to the descriptions of the panoramic surround-view device 900 or the panoramic surround-view system 1100 above, and they are not described here again for the sake of brevity.

Unless otherwise defined, all of the terms (including technical and scientific terms) used herein have the same meanings as those commonly understood by those skilled in the art. It should also be understood that terms such as those generally defined in a dictionary should be interpreted as having the same meanings as in the context of the related art, rather than being interpreted in an idealized or extremely formalized sense, unless expressly so defined herein.

The present disclosure has been described in detail above, but it is obvious to those skilled in the art that the present disclosure is not limited to the implementations described in this specification. The present disclosure can be implemented as a modification and alteration without departing from the gist and scope of the present disclosure as determined by the claims. Therefore, the description in this specification is for the purpose of illustration and does not have any restrictive meaning for the present disclosure.

## Claims

1. A method for generating a surround-view image, comprising:
at a first moment, determining a first environment image around a motor vehicle, wherein the first environment image is covered with a first filling range, and wherein the first filling range covers a region corresponding to an underside of the motor vehicle in the first environment image, and covers a shadow region around the motor vehicle in the first environment image;
intercepting an image from an image interception region in the first environment image, wherein the image interception region is outside the first filling range of the first environment image;
acquiring operating parameters of the motor vehicle;
at a second moment after the first moment, determining a second environment image around the motor vehicle, wherein the second environment image is covered with a second filling range corresponding to the first filling range; and
according to the operating parameters, mapping the image to the second filling range of the second environment image to generate a surround-view image.

2. The method as claimed in claim 1, further comprising:
intercepting a third filling range image corresponding to a third filling range from the surround-view image, wherein the second environment image is covered with a third filling range, and wherein the third filling range corresponds to a region corresponding to the underside of the motor vehicle in the second environment image and does not cover the shadow region of the motor vehicle in the second environment image; and
stitching the third filling range image into the second environment image to generate a surround-view image including the shadow region.

3. The method as claimed in claim 1, wherein
in a traveling direction of the motor vehicle, the image interception region is adjacent to the first filling range.

4. The method as claimed in any one of claims 1 to 3, further comprising:
in the surround-view image or the surround-view image including the shadow region, rendering a transparent vehicle model corresponding to the motor vehicle in a region corresponding to the underside of the motor vehicle.

5. The method as claimed in any one of claims 1 to 3, further comprising:
determining the first filling range and/or the second filling range according to a size of the shadow region around the motor vehicle and a size of the motor vehicle.

6. A panoramic surround-view device, comprising:
one or more processors; and
one or more memories, wherein the memories have computer-readable instructions stored herein, and the computer-readable instructions, when executed by the one or more processors, cause the one or more processors to perform the method as claimed in any one of claims 1 to 5.

7. A computer program product, comprising computer-readable instructions stored in a computer-readable storage medium, wherein the computer-readable instructions, when executed by a processor, cause the processor to perform the method as claimed in any one of claims 1 to 5.

8. A panoramic surround-view system, comprising:
an image acquisition module configured for: determining a first environment image around a motor vehicle at a first moment, and determining a second environment image around the motor vehicle at a second moment after the first moment,
wherein the first environment image is covered with a first filling range, wherein the first filling range covers a region corresponding to an underside of the motor vehicle in the first environment image, and covers a shadow region around the motor vehicle in the first environment image, and wherein the second environment image is covered with a second filling range corresponding to the first filling range; and
an image reconstruction module configured for: intercepting an image from an image interception region in the first environment image, and mapping the image to the second filling range of the second environment image according to the operating parameters to generate a surround-view image, wherein the image interception region is outside the first filling range of the first environment image.

9. The panoramic surround-view system as claimed in claim 8, wherein the image reconstruction module is further configured for:
intercepting a third filling range image corresponding to a third filling range from the surround-view image, wherein the second environment image is covered with a third filling range, and wherein the third filling range corresponds to a region corresponding to the underside of the motor vehicle in the second environment image and does not cover the shadow region of the motor vehicle in the second environment image; and
stitching the third filling range image into the second environment image to generate a surround-view image including the shadow region.

10. A motor vehicle, the motor vehicle being equipped with the panoramic surround-view device as claimed in claim 6 or the panoramic surround-view system as claimed in claim 8 or 9.
